# EUROPÄISCHE PATENTSCHRIFT

(11) **EP 1 401 684 B1**
(45) Veröffentlichungstag und Bekanntmachung des Hinweises auf die Patenterteilung: **15.12.2004**
(21) Anmeldenummer: 02754276.0
(22) Anmeldetag: 27.06.2002
(51) Int. Cl.: B60R 21/01, H01H 3/14

(54) **EINRICHTUNG UND VERFAHREN ZUR SITZBELEGUNGSERKENNUNG IN EINEM KRAFTFAHRZEUG**
DEVICE AND METHOD FOR DETECTING THE OCCUPATION OF A SEAT IN A MOTOR VEHICLE
DISPOSITIF ET PROCEDE POUR DETECTER L'OCCUPATION DE SIEGES DANS UNE AUTOMOBILE

(30) Priorität: 02.07.2001 DE 10131954
(43) Veröffentlichungstag der Anmeldung: 31.03.2004
(73) Patentinhaber: SIEMENS AKTIENGESELLSCHAFT, 80333 München (DE)
(72) Erfinder: OFFEREINS, Henderikus, 84085 Langquaid (DE); GEYER, Manfred, 93055 Regensburg (DE); BAUER, Hans-Peter, 93049 Regensburg (DE); HOMANN, Michelle, 48316 Shelby Township, Michigan (US)
(86) Internationale Anmeldenummer: PCT/DE2002/002353
(87) Internationale Veröffentlichungsnummer: WO 2003/004318

(56) Entgegenhaltungen:
- EP-A- 0 895 091
- DE-A- 19 802 099
- BILLEN K: "Occupant Classification System for Smart Restraint Systems" SAE PAPER 1999-01-0761, XX, XX, Januar 1999 (1999-01), Seiten 33-38, XP002184965
- PATENT ABSTRACTS OF JAPAN vol. 2000, no. 13, 5. Februar 2001 (2001-02-05) & JP 2000 275115 A (ALPS ELECTRIC CO LTD), 6. Oktober 2000 (2000-10-06)

## Beschreibung

Die Erfindung betrifft eine Einrichtung und ein Verfahren zur Sitzbelegungserkennung in einem Kraftfahrzeug mit flächig auf der Sitzfläche eines Fahrzeugsitzes angeordneten ersten Sensorelementen zum Erfassen der Sitzbelegung des Fahrzeugsitzes, wobei die ersten Sensorelemente insbesondere innerhalb einer ersten Sensorsitzmatte (OCSM) angeordnet sind und die Sensorsignale der ersten Sensorelemente abhängig von der auf sie aufgebrachten Gewichtskraft sind, mit einer den ersten Sensorelementen nachgeschalteten Auswerteeinheit zum Auswerten der Signale der ersten Sensorelemente, der sogenannten ersten Sensorsignale, und einer der Auswerteeinheit nachgeschalteten Steuereinheit zur Anpassung des Auslöseverhaltens eines Insassenrückhaltemittels, beispielsweise eines Airbags, in Abhängigkeit von den bewerteten ersten Sensorsignalen.

Bei einer Vielzahl von technischen Anwendungen in Kraftfahrzeugen ist die Sitzbelegung durch Kraftfahrzeuginsassen eine wichtige Eingangsgröße. In besonderem Maße gilt dies für Insassenrückhaltesysteme, deren effizienter Einsatz oft von der Sitzposition des Fahrzeuginsassen abhängt.
Zur Sitzbelegungserkennung in Kraftfahrzeugen werden sogenannte Sensorsitzmatten verwendet, die aus einer Vielzahl von druckempfindlichen Sensorelementen bestehen. Diese sind über die Sitzfläche eines Fahrzeugsitzes verteilt angeordnet und können somit die Druckeinwirkung einer Person oder eines Objekts auf die Sitzfläche erfassen.

Insassenerkennungssysteme, die solche Sensorsitzmatten verwenden, sind bekannt als Occupation Classification Systeme (OCS). Ein solches OCS ist beispielsweise beschrieben in der Druckschrift DE 200 14 200 U1 und in dem Artikel "Occupation Classification System for Smart Restraint System" aus dem Tagungsband der Fachtagung Airbag 2000+, 30. November bis 2. Dezember 1998 in Karlsruhe, Deutschland, ISSN 0722-4087.

In einem für eine nachfolgende Auswertung besonders bevorzugten Bereich besteht ein weitgehend linearer Zusammenhang zwischen der einwirkenden Gewichtskraft und dem davon abhängigen elektrischen Widerstandswert der signalgebenden Sensorelemente. Die veränderlichen Widerstandswerte werden durch die Sensorelemente in Sensorsignale umgesetzt.

Durch eine Auswertung der Sensorsignale in einer Auswerteeinheit des OCS wird ein Sitzprofil erstellt, anhand dessen auf die Sitzposition eines Fahrzeuginsassen zurückgeschlossen wird, aber auch auf Gegenstände, die auf dem Sitz abgestellt wurden.

In Abhängigkeit von der ermittelten Sitzbelegung wird das Auslöseverhalten eines Insassenrückhaltemittels durch die Steuereinheit des Insassenschutzsystems gegebenenfalls verändert, so dass ein bestmöglicher Schutz für den Fahrzeuginsassen je nach seiner momentanen Sitzpos.ition gewährleistet ist. Dabei kann es unter Umständen notwendig sein, die Auslösung eines Insassenrückhaltemittels wie beispielsweise die eines Airbags gänzlich zu unterdrücken, wenn sich beispielsweise ein Fahrzeuginsasse zu nah an dem auszulösenden Insassenrückhaltemittel (Airbag) befindet.

Bei der Verwendung eines OCS als Insassenerkennungssystem, muss die Wahrscheinlichkeit einer Fehlfunktion so gering wie möglich gehalten werden, da im Falle einer Fehlfunktion des Insassenerkennungssystems (OCS) eine ernsthafte Verletzung des zu schützenden Kraftfahrzeuginsassen zu befürchten ist. Beispielsweise verfälscht ein unbemerkt erhöhter Leitungswiderstand im Strompfad zu den Sensorelementen der Sensorsitzmatte des OCS die Widerstandswerte der Sensorelemente möglicherweise erheblich, wodurch die Auswerteeinheit des OCS ein falsches Gewichtssignal eines Kraftfahrzeuginsassen ermittelt und dadurch ein falsches Ergebnis für die Auslösestrategie des Insassenerkennungssystems zugrundegelegt wird.

Das auf diese Weise falsch bestimmte Gewicht eines Fahrzeuginsassen oder gar seine falsche Klassifizierung, beispielsweise als besonders schwere oder große Person, könnte dazu führen, dass die Steuereinheit des Insassenschutzsystems einen Airbag zum vermeintlichen Schutz des Insassen auch dann auslöst, wenn dies für den tatsächlich auf dem Fahrzeugsitz befindlichen Fahrzeuginsassen eher von Schaden ist. Ebenso könnte eine falsche Klassifizierung als besonders leichte und kleine Person die Auslösung eines Airbags verhindern, obwohl dies gegebenenfalls den Insassen im Falle eines Unfalls vor Verletzungen schützen würde.

Aus dieser Betrachtung wird ersichtlich wie zuverlässig und genau das OCS die Sitzposition eines Fahrgastes ermitteln muss, um es gefahrlos im Rahmen eines Insassenschutzsystems eines Krartranrzeugs betreiben zu können.

Aufgabe der vorliegenden Erfindung ist es deshalb, eine Einrichtung zur Insassenerkennung in einem Kraftfahrzeug zu schaffen, bei dem die Signale des Insassenerkennungssystems auf ihre Richtigkeit hin überprüft werden können.

Diese Aufgabe wird gelöst durch eine Einrichtung mit den Merkmalen des Patentanspruchs 1.
Ein zur Lösung der Aufgabe geeignetes Verfahren ist im unabhängigen Patentanspruch 9 wiedergegeben.

Die erfindungsgemäße Einrichtung dient zur Sitzbelegungserkennung in einem Kraftfahrzeug und umfasst flächig auf einer Sitzfläche eines Fahrzeugsitzes angeordnete Sensorelemente, insbesondere Sensorelemente innerhalb einer ersten Sensorsitzmatte. Die Sensorelemente dieser ersten Sensorsitzmatte, im Weiteren auch als erste Sensorelemente bezeichnet, setzen eine auf sie wirkende Gewichtskraft eines Fahrzeuginsassen oder Gegenstands in elektrische Signale um.

Die Auswerteeinheit, der die Signale der Sensorelemente zugeführt werden, nimmt nachfolgend eine Bewertung der Sensorsignale vor, die in einer Klassifizierung des auf den Sitz wirkenden Gewichts endet. Je nach Art der verwendeten Sensorelemente der Sensorsitzmatte kann eine Gewichtsklassifizierung im einfachsten Fall eine Aussage belegt/nicht belegt beinhalten, aber auch eine Klassifizierung nach dem Gewicht, beispielsweise durch eine Unterscheidung von leichten, mittleren oder sehr schweren Personen oder es erfolgt sogar eine Klassifizierung anhand der Gewichtsverteilung auf dem Fahrzeugsitz. Eine solche Klassifizierung kann beispielsweise Gesäßformen und Gewichtsverlagerungen unterscheiden. Beispielsweise kann eine sehr große und hagere Person von einer dicken Person anhand der Gesäßform unterschieden werden, ebenso wie eine Vorverlagerung einer beliebigen Person anhand der ungleichmäßig belasteten Sitzrlache.

Die in dieser Art klassifizierte Gewichtsinformation wird an die der Auswerteeinheit nachgeschaltete Steuereinheit eines Insassenrückhaltemittels übermittelt. Die Steuereinheit des Insassenrückhaltemittels, beispielsweise eines Airbags, berücksichtigt das Ergebnis der Klassifizierung der Gewichtsinformation der Auswerteeinheit in einer ggf. modifizierten Auslösestrategie des Insassenrückhaltemittels (Airbags).

Zur erfindungsgemäßen Überprüfung des Ergebnisses der Klassifizierung der Auswerteeinheit werden nun die Sensorsignale weiterer, ebenfalls flächig auf der Sitzfläche des Fahrzeugsitzes angeordneter Sicherheitssensorelemente hinzugezogen, die sogenannten zweiten Sensorsignale. Auch die Signale dieser Sicherheitssensorelemente werden der Auswerteeinheit zugeführt. Auch die Sicherheitssensorelemente ermöglichen je nach ihrem Aufbau eine Klassifizierung des auf dem Fahrzeugsitz befindlichen Objekts je nach dessen Gewicht oder dessen Gewichtsverteilung..

Die Auswerteeinheit kann nun das Ergebnis aus der Gewichtsklassifizierung anhand der Sensorsignale der Sicherheitssensorelemente mit dem Ergebnis der Klassifizierung der ersten Sensorelemente der ersten Sensorsitzmatte vergleichen. Ungleiche Ergebnisse der beiden Klassifizierungen deuten auf eine Fehlfunktion entweder der ersten Sensorelemente oder der Sicherheitssensorelemente hin, was dazu führen kann, dass die Steuereinheit ihre Art der Auslösung des Insassenrückhaltemittels nicht verändert oder die Veränderung des Auslöseverhaltens nur in einer derart abgeschwächten Form durchführt, dass ein Fahrzeuginsasse nicht der unnötigen Gefahr einer Verletzung durch den Airbag ausgesetzt ist.

Vorteilhafterweise sind die Sicherheitssensorelemente innerhalb einer zweiten Sensorsitzmatte oberhalb oder unterhalb der ersten Sensorsitzmatte flachig auf dem Fahrzeugsitz angeordnet.

Vorteilhafterweise sind dabei die beiden Sensorsitzmatten miteinander verklebt. Dies verhindert ein Verrutschen der ersten Sensorelemente relativ zu den Sicherheitssensorelementen, was insbesondere dann vermieden werden muss, wenn sich einzelne Sensorelemente der ersten und der zweiten Sensorsitzmatte jeweils einzeln überwachen.

In einer weiteren Ausführungsform sind die Sicherheitssensorelemente auf der ersten Sensorsitzmatte integriert angeordnet. Beispielsweise können die ersten Sensorelemente und die Sicherheitssensorelemente im wesentlichen einen gleichen strukturellen Aufbau besitzen und nebeneinander angeordnet sein.

In einer weiteren Ausführungsform kann je ein Sicherheitssensorelement zur Überwachung der korrekten Funktionsweise mindestens eines ersten Sensorelements oder sogar mehrerer erster Sensorelemente dienen, die vorzugsweise benachbart angeordnet sind.

Vorteilhafterweise ist jedem ersten Sensorelement je ein Sicherheitssensorelement zugeordnet, so dass jedes einzelne erste Sensorelement einzeln überwacht werden kann. Der Vorteil einer solchen Anordnung von ersten Sensorelementen und Sicherheitssensorelementen zueinander liegt darin, dass auch eine Fehlfunktion eines einzelnen ersten Sensorelements durch das ihm zugeordnete Sicherheitssensorelement festgestellt wird, so dass bei einer korrekten Funktionsweise der übrigen ersten Sensorelemente nur diese zu einer veränderten Auslösestrategie der Steuereinheit des Insassenrückhaltemittels beitragen. Die Signale des fehlerhaften ersten Sensorelements werden hingegen einfach ignoriert

Bei einem gleichen oder sehr ähnlichen Aufbau der ersten Sensorelemente und der Sicherheitssensorelemente können neben der Überprüfung der korrekten Funktionsweise der ersten Sensorelemente durch die Sicherheitssensorelemente auch aufbaubedingte Signalveränderungen der ersten Sensorelemente erkannt werden, da diese Signalveränderungen bei beiden Sensorelementen in gleicher Weise auftreten.

Solche aufbaubedingten Signalveränderungen können beispielsweise durch eine Temperaturabhängigkeit des Signalverlaufs der Sensorelemente in Abhängigkeit von der auf sie wirkenden Gewichtskraft hervorgerufen werden oder auch durch den Einfluss von Verspannungen auf die Sensorelemente, beispielsweise wenn beide Sensorelemente an einer Knickstelle des Fahrzeugsitzes angeordnet sind.

Systematisch sehr stark schwankende Signale der ersten Sensorelemente können dann beispielsweise leicht von störungsbedingten Signaloszillationen der Sensorelemente unterschieden werden, wenn die Signalschwankungen an der ersten und Sicherheitssensorelemente gleichzeitig auftreten.

Bei dem erfindungsgemäßen Verfahren zur Sitzbelegungserkennung in einem Kraftfahrzeug übermitteln flächig auf einem Fahrzeugsitz angeordnete erste Sensorelemente einer ersten Sensorsitzmatte die Information einer auf den Fahrzeugsitz wirkenden Gewichtskraft als Sensorsignale an eine Auswerteeinheit. Die Auswerteeinheit wertet die ersten Sensorsignale im Folgenden soweit aus, dass eine Klassifizierung des Gegenstands oder der Person anhand des Gewichts auf dem Fahrzeugsitz stattfindet.

Das Ergebnis der Klassifizierung wird anschließend an eine Steuereinheit übermittelt, die das Auslöseverhalten eines Insassenschutzmittels, beispielsweise eines Airbags, an die ermittelte Sitzbelegung nur dann anpasst, wenn anhand der Signale einer zweiten Sensorsitzmatte, bestehend aus Sicherheitssensorelementen, die erste Klassifizierung der Auswerteeinheit anhand der ersten Sensorsignale.durch eine zweite Klassifizierung anhand der zweiten Sensorsignale der Sicherheitssensorelemente durch die Auswerteeinheit bestätigt wird.

Wie bereits weiter oben beschrieben ist eine solche nur teilweise Anpassung des Auslöseverhaltens des Insassenrückhaltemittels an das Ergebnis der Gewichtsklassifizierung der erfindungsgemäßen Einrichtung zugleich auch ein Hinweis auf eine fehlerhafte erste Sensorsitzmatte oder eine fehlerhafte zweite Sensorsitzmatte. Vorteilhafterweise wird diese mögliche Fehlfunktion an den Fahrzeuginsassen mitgeteilt, beispielsweise durch eine Warnlampe im Armaturenbereich des Fahrzeugs. Der Fahrer kann daraufhin eine Behebung des Fehlers in der Einrichtung zur Sitzbelegungserkennung in seinem Kraftfahrzeug durch eine Fachwerkstatt veranlassen.

Im Folgenden wird die Erfindung anhand von zwei Ausführungsbeispielen beschrieben.

Es zeigen:

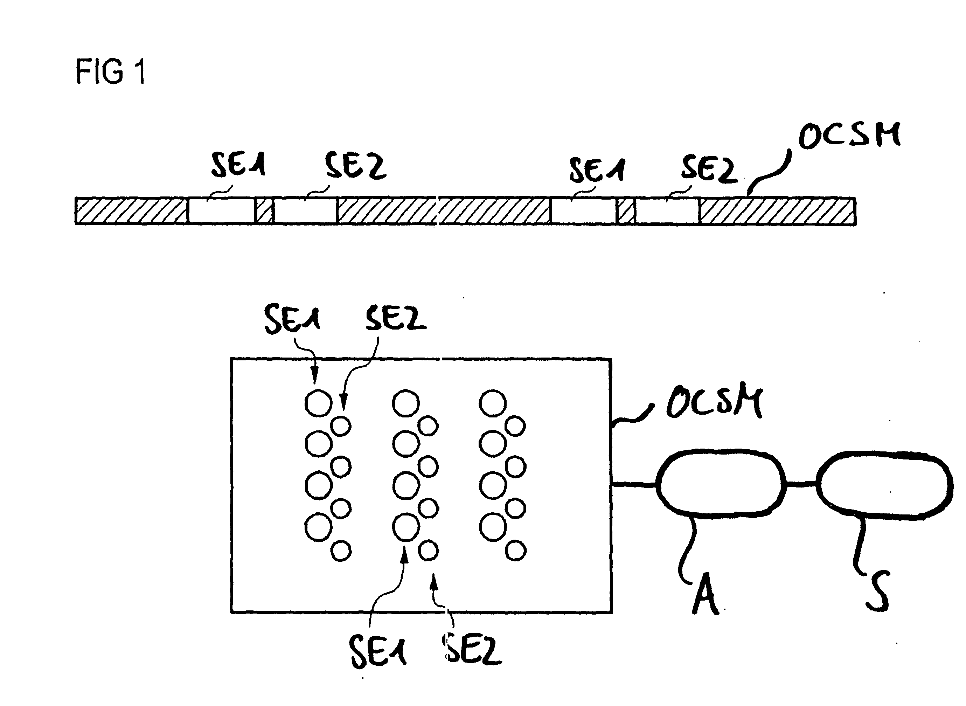

- Figur 1: einen Querschnitt durch und eine Draufsicht auf die Fläche einer erfindungsgemäßen Einrichtung, die als eine erste Sensorsitzmatte (OCSM) neben ersten Sensorelementen (SE1) nun auch Sicherheitssensorelemente (SE2) aufweist, die auf der ersten Sensorsitzmatte (OCSM) integriert angeordnet sind und

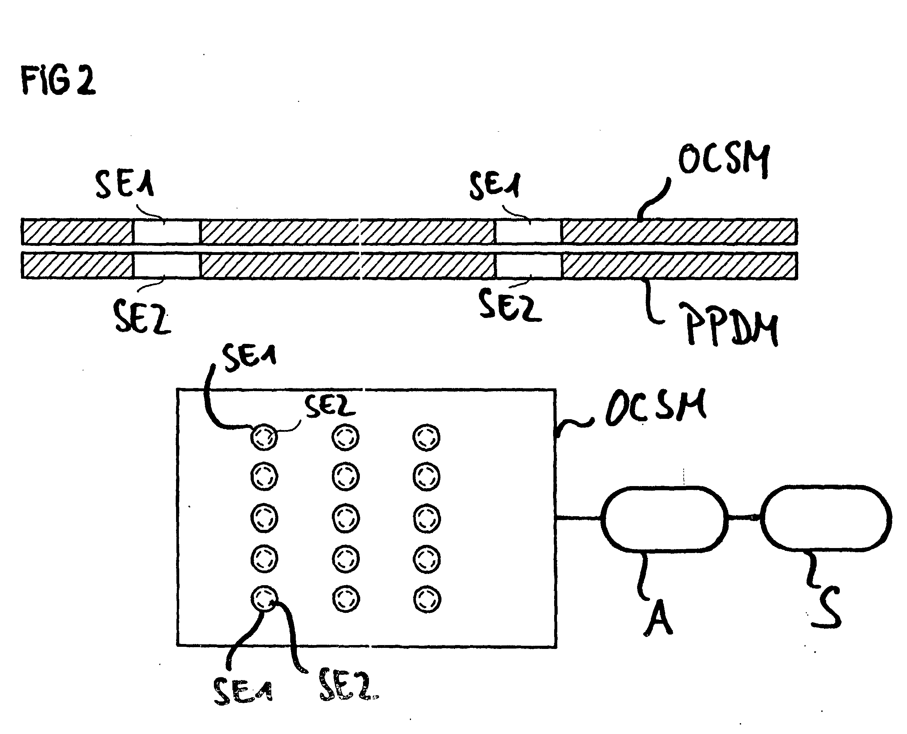

- Figur 2: einen Querschnitt durch und eine Draufsicht auf die Fläche einer erfindungsgemäßen Einrichtung, mit einer ersten Sensorsitzmatte (OCSM) aus ersten Sensorelementen (SE1) und mit einer zweiten Sensorsitzmatte (PPDM), die unterhalb der ersten Sensorsitzmatte (OCSM) angeordnet ist und die aus Sicherheitssensorelementen (SE2) besteht

Im oberen Teil der Figur 1 ist ein Querschnitt einer erfindungsgemäßen Sensorsitzmatte OCSM mit Sensorelementen SEi dargestellt, wobei benachbart sogenannte Sicherheitssensorelemente SE2 angeordnet sind. Im unteren Abschnitt der Figur 1 ist die Sensorsitzmatte OCSM mit den darauf integrierten ersten Sensorelementen SE1 und den daneben befindlichen Sicherheitssensorelementen SE2 dargestellt sowie die nachgeschaltete Auswerteeinheit A und die Steuereinheit des Insassenschutzmittels.

In dieser Ausführungsform bewirkt ein Gegenstand mit ausreichend flächiger Ausdehnung eine vergleichbar große Gewichtskraft gleichzeitig auf ein erstes Sensorelement SE1 und auf ein Sicherheitssensorelement SE2. Die Signale eines ersten Sensorelements SE1 und die Signale eines Sicherheitssensorelements SE2 werden der Auswerteeinheit A zugeführt. Durch einen Schaltungsteil oder auch durch einen Schaltungsteil in Kombination mit einer vergleichenden Software, werden die beiden Signale nun dort miteinander verglichen. Stimmen die Signale des ersten Sensorelements (SE1) und die des Sicherheitssensorelements (SE2) nicht miteinander überein, so wird dies von der Auswerteeinheit A an die Steuereinheit-S des Insassenschutzmittels, beispielsweise des Airbags, gemeldet. Der Steuereinheit S obliegt nun die Entscheidung, das Ergebnis nicht oder nur teilweise in seiner Auslöseentscheidung des Airbags zu berücksichtigen.

Bei einer dauerhaften Störung der Sensorsignale der Sicherheitselemente SE2 und/oder der Signale der ersten Sensorelemente SE1 gibt die Steuereinheit S einen Steuerbefehl zur Ausgabe eines Warnhinweises an den Fahrgast aus, und zwar in Form einer Airbagwarnlampe. Durch die Warnlampe wird der Fahrzeughalter darauf hingewiesen, dass das Insassenschutzsystem nicht in seinem vollen Funktionsumfang zur Verfügung steht und ist dadurch aufgefordert, umgehend eine Vertragswerkstatt zur Behebung des Schadens aufzusuchen.

Figur 2 zeigt eine weitere Ausführungsform der erfindungsgemäßen Einrichtung. Im oberen Abschnitt der Figur 2 ist ein Querschnitt zweier übereinander angeordneter Sensorsitzmatten OCSM und PPDM gezeigt. Die erste Sensorsitzmatte OCSM ist vorzugsweise mit der zweiten Sensorsitzmatte PPDM verklebt, so dass jeweils ein erstes Sensorelement SE1 über einem Sicherheitselement SE2 auf dem Fahrzeugsitz zu liegen kommt.

Der untere Teil der Figur 2 zeigt eine Draufsicht dieser Anordnung. Dabei sind die ersten Sensorelemente der ersten Sensorsitzmatte OCSM liniert eingezeichnet, die darunter liegenden Sicherheitssensorelemente SE2 der zweiten Sensorsitzmatte PPDM hingegen strichliert. Ebenso dargestellt sind wiederum die nachgeschaltete Auswerteeinheit A sowie die Steuereinheit S des Insassenschutzmittels.

Wie im Ausführungsbeispiel der Figur 1 ist jeweils ein Sicherheitssensorelement einem Sensorelement der ersten Sensorsitzmatte OCSM zugeordnet.

Die gezeigte Anordnung von übereinander liegenden Sensorelementen hat den Vorteil, dass sowohl auf ein erstes Sensorelement SE1 als auch auf ein Sicherheitssensorelement SE2 immer die gleiche Gewichtskraft wirkt, sobald ein Gewicht auf der ersten Sensorsitzmatte OCSM aufliegt.

Wie in dem Ausführungsbeispiel der Figur 1 werden die Sensorsignale der ersten Sensorelemente SE1 jeweils mit denen der Sicherheitssensorelemente SE2 in der nachgeschalteten Auswerteeinheit A verglichen. Nur wenn die Messergebnisse in einem vorher festgelegten Toleranzbereich miteinander übereinstimmen, wird nachfolgend die bestätigte Gewichtsklassifizierung des auf der Sitzfläche aufliegenden Gewichts zu einer Abänderung des Auslöseverhaltens des Airbags durch die Steuereinheit S des Insassenschutzsystems verwendet.

## Patentansprüche

1. Einrichtung zur Sitzbelegungserkennung in einem Kraftfahrzeug mit
- flächig auf der Sitzfläche eines Fahrzeugsitzes angeordneten ersten Sensorelementen (SE1) zum Erfassen der Sitzbelegung des Fahrzeugsitzes, wobei die Sensorsignale der ersten Sensorelemente (SE1), die sogenannten ersten Sensorsignale, abhängig sind von der auf die ersten Sensorelemente (SE1) aufgebrachten Gewichtskraft,
- einer den ersten Sensorelementen (SE1) nachgeschalteten Auswerteeinheit (A) zum Auswerten der ersten Sensorsignale,
- einer der Auswerteeinheit (A) nachgeschalteten Steuereinheit (S) zur Anpassung des Auslöseverhaltens eines Insassenrückhaltemittels in Abhängigkeit von den bewerteten ersten Sensorsignalen und
- weiteren flächig auf der Sitzfläche des Fahrzeugsitzes angeordneten und ebenfalls mit der Auswerteeinheit (A) verbundenen Sicherheitssensorelementen (SE2) zur Überprüfung der Funktionsfähigkelt der ersten Sensorelemente (SE1)
**dadurch gekennzeichnet, dass**
die Sicherheitssensorsignale der Sicherheitssensorelemente (SE2) ebenfalls abhängig sind von der auf sie aufgebrachten Gewichtskraft und die Funktionsfähigkeit der Einrichtung durch die Auswerteeinheit (A) anhand des Vergleichs der ersten Sensorsignale mit den Sicherheitssensorsignalen feststellbar ist:

2. Einrichtung nach Anspruch 1, wobei
der Aufbau der ersten Sensorelemente (S1) und der Sicherheitssensorelemente (S2) identisch ist.

3. Einrichtung nach Anspruch 1 oder 2, wobei
die ersten Sensorelemente (SE1) innerhalb einer ersten Sensorsitzmatte (OCSM) angeordnet sind und die Sicherheitssensorelemente (SE2) innerhalb einer zweiten Sensorsitzmatte (PPDM) oberhalb oder unterhalb der ersten Sensorsitzmatte (OCSM) flächig auf dem Fahrzeugsitz angeordnet sind.

4. Einrichtung nach Anspruch 3, wobei
die zweite Sensorsitzmatte (PPDM) fest mit der ersten Sensorsitzmatte (OCSM) verbunden ist.

5. Einrichtung nach Anspruch 4, wobei
die zweite Sensorsitzmatte (PPDM) mit der ersten Sensorsitzmatte (PPDM) verklebt ist.

6. Einrichtung nach Anspruch 1 oder 2, wobei
die Sicherheitssensorelemente (SE2) auf der ersten Sensorsitzmatte (OCSM) integriert angeordnet sind.

7. Einrichtung nach einem der bisherigen Ansprüche, wobei mindestens ein Sicherheitssensorelement (SE2) mindestens einem ersten Sensorelement (SE1) zur Überprüfung der Funktionsfähigkeit des mindestens ersten Sensorelement (SE1) zugeordnet ist.

8. Einrichtung nach Anspruch 7, wobei
jeweils genau ein Sicherheitssensorelement (SE2) genau einem ersten Sensorelement (SE1) zur Überprüfung der korrekten Funktionsweise dieses ersten Sensorelements (SE1) zugeordnet ist.

9. Verfahren zur Sitzbelegungserkennung in einem Kraftfahrzeug, bei dem
- flächig auf einem Fahrzeugsitz angeordnete erste Sensorelemente (SE1) einer ersten Sensorsitzmatte (OCSM) die auf den Fahrzeugsitz einwirkende Gewichtskraft in erste Sensorsignale umsetzen und an eine Auswerteeinheit (A) übermitteln,
- flächig auf dem Fahrzeugsitz angeordnete Sicherheitssensorelemente (SE2) einer zweiten Sensorsitzmatte (EPPM) die auf dem Fahrzeugsitz einwirkende Gewichtskraft in Sicherheitssensorsignale umsetzen und an die Auswerteeinheit (A) übermitteln,
- die Auswerteeinheit (A) die ersten Sensorsignale (SEI) auswertet und eine Sitzbelegung des Fahrzeugsitzes aufgrund dieser Auswertung ermittelt und
- eine Steuereinheit (S) das Auslöseverhalten eines Insassenschutzmittels an die ermittelte Sitzbelegung nur dann anpasst,
wenn die Sicherheitssensorelemente.der zweiten Sensorsitzmatte (PPDM) die in der Auswerteeinheit (A) ermittelten ersten Sensorsignale durch Sicherheitssensorsignale bestätigt.

10. Verfahren nach Anspruch 9, bei dem
die Steuereinheit (S) ein Warnsignal ausgibt, wenn die mit der ersten Sensorsitzmatte (OCSM) ermittelte Sitzbelegung auf dem Fahrzeugsitz nicht von den ausgewerteten zweiten Sensorsignalen (SE2) der zweiten Sensorsitzmatte (PPDM) bestätigt wird.

## Claims

1. Device for detecting the occupation of a seat in a motor vehicle
having
- flatly arranged on the seat surface of a vehicle seat, first sensor elements (SE1) for detecting the occupation of the vehicle seat, wherein the sensor signals from the first sensor elements (SE1), the so-called first sensor signals, are dependent on the weight force applied to the first sensor elements (SE1),
- an evaluating unit (A) downstream from the first sensor elements (SE1), for evaluating the first sensor signals, and
- a control unit (S) downstream from the evaluating unit (A), for adapting the triggering parameters of an occupant restraining means depending on the evaluated first sensor signals
- further safety sensor elements (SE2) flatly arranged on the seat surface of a vehicle and similarly linked to an evaluating unit (A) for monitoring the operability of the first sensor elements (SE1)
**characterised in that**
the safety sensor signals of the safety sensor elements (SE2) are similarly dependent on the weight force applied thereon and the operability of the device can be determined by the evaluating unit (A) on the basis of the comparison of the first sensor signals with the safety sensor signals.

2. Device according to Claim 1, wherein
the structures of the first sensor elements (S1) and the safety sensor elements are identical

3. Device according to Claim 1 or Claim 2, wherein
the first sensor elements (SE1) are arranged within a first sensor seat mat, and the safety sensor elements (SE2) within a second sensor seat mat (PPDM) are arranged flatly on the vehicle seat, above or below the first sensor seat mat (OCSM).

4. Device according to Claim 3, wherein the second sensor seat mat (PPDM) is bonded to the first sensor seat mat (OCSM).

5. Device according to Claim 4, wherein
the second sensor seat mat (PPDM) is bonded to the first sensor seat mat (OCSM).

6. Device according to Claim 1 or 2, wherein
the safety sensor element (SE2) is integrated onto the first sensor seat mat (OCSM).

7. Device according to one of the preceding Claims wherein at least one safety sensor element (SE2) is assigned at least one first sensor element (SE1) for monitoring the operability of the at least first sensor element (SE1).

8. Method according to Claim 7, wherein
precisely one safety sensor element (SE2) is assigned precisely one first sensor element (SE1) for monitoring the correct mode of operation of this first sensor element (SE1).

9. Method for detecting seat occupancy in a motor vehicle, wherein
- flatly arranged on the seat surface of a vehicle seat, first sensor elements (SE1) which convert the weight force imposed on the vehicle seat into a first sensor signal and transmit this to an evaluating unit (A),
- flatly arranged on the seat surface of a vehicle seat, safety elements (SE2) of a second sensor seat mat (PPDM) which convert the weight force acting on the vehicle seat into safety sensor signals and transmit them to an evaluating unit (A),
- the evaluating unit evaluates the first sensor signals (SE1) said evaluation determining a seat occupancy of the vehicle seat
- a control unit (S) which only then matches the triggering behaviour of a passenger protection system to the determined seat occupancy,
when the safety sensor elements of the second sensor seat mats (PPDM) confirms the first sensor signals determined in the evaluation unit (A) by means of the safety sensor signals (A).

10. Method according to Claim 9, wherein
the control unit (S) emits a warning signal if the seat occupancy on the vehicle seat determined by the first sensor seat mat (OSCM) it is not confirmed by the evaluated second sensor signals (SE2) of the second sensor seat mats (PPDM).

## Revendications

1. Dispositif pour la détection d'occupation de siège dans un véhicule automobile comprenant
- des premiers éléments de capteur (SE1) disposés à plat sur une assise d'un siège de véhicule pour la détection de l'occupation de siège du siège automobile, les signaux de capteur des premiers éléments de capteur (SE1), les premiers signaux de capteur, étant dépendants de la force de poids appliquée sur les premiers éléments de capteur (SE1),
- une unité d'analyse (A) montée en aval des premiers éléments de capteur (SE1) pour l'analyse des premiers signaux de capteur,
- une unité de commande (S) montée en aval de l'unité d'analyse (A) pour l'adaptation du comportement au déclenchement d'un moyen de retenue de passager en fonction des premiers signaux de capteur évalués, et
- d'autres éléments de capteur de sécurité (SE2) disposés à plat sur l'assise du siège de véhicule et également reliés à l'unité d'analyse (A) pour le contrôle du bon fonctionnement des premiers éléments de capteur (SE1)
**caractérisé en ce que**
les signaux du capteur de sécurité des éléments du capteur de sécurité (SE2) sont également dépendants de la force de poids appliquée sur eux et le bon fonctionnement de l'appareil peut être constaté par l'unité d'analyse (A) à l'aide de la comparaison des premiers signaux de capteur avec les signaux du capteur de sécurité.

2. Dispositif selon la revendication 1, dans lequel la structure des premiers éléments de capteur (SE1) et des éléments du capteur de sécurité (SE2) est identique.

3. Dispositif selon la revendication 1 ou 2, dans lequel les premiers éléments de capteur (SE1) sont disposés à l'intérieur d'un premier coussin du siège à capteur (OCSM) et les éléments du capteur de sécurité (SE2) sont disposés à l'intérieur d'un second coussin du siège à capteur (PPDM) au-dessus ou au-dessous du premier coussin du siège à capteur (OCSM) à plat sur le siège de véhicule.

4. Dispositif selon la revendication 3, dans lequel le second coussin du siège à capteur (PPDM) est relié de façon fixe au premier coussin du siège à capteur (OCSM).

5. Dispositif selon la revendication 4, dans lequel le second coussin du siège à capteur (PPDM) est collé avec le premier coussin du siège à capteur (PPDM).

6. Dispositif selon la revendication 1 ou 2, dans lequel les éléments du capteur de sécurité (SE2) sont disposés de façon intégrée sur le premier coussin du siège à capteur (OCSM).

7. Dispositif selon l'une quelconque des revendications précédentes, dans lequel au moins un élément du capteur de sécurité (SE2) est attribué à au moins un premier élément de capteur (SE1) pour le contrôle du bon fonctionnement du au moins premier élément de capteur (SE1).

8. Dispositif selon la revendication 7, dans lequel à chaque fois exactement un élément du capteur de sécurité (SE2) est attribué exactement à un premier élément de capteur (SE1) pour le contrôle du fonctionnement correct de ce premier élément de capteur (SE1).

9. Procédé pour la détection d'occupation de siège dans un véhicule automobile, dans lequel :
- des premiers éléments de capteur (SE1) disposés à plat sur un siège de véhicule d'un premier coussin du siège à capteur (OCSM) convertissent la force de poids agissant sur le siège de véhicule en premiers signaux de capteur et les transmettent à une unité d'analyse (A),
- des éléments de capteur de sécurité (SE2) disposés à plat sur le siège du véhicule d'un second coussin du siège à capteur (PPDM) convertissent la force du poids agissant sur le siège de véhicule en signaux de capteur de sécurité et les transmettent à l'unité d'analyse (A),
- l'unité d'analyse (A) analyse les premiers signaux de capteur (SE1) et détermine une occupation du siège du véhicule sur la base de cette analyse, et
- une unité de commande (S) adapte le comportement au déclenchement d'un moyen de protection des passagers à l'occupation de siège déterminée uniquement dans les cas où les éléments du capteur de sécurité du second coussin du siège à capteur (PPDM) confirment les premiers signaux de capteur déterminés dans l'unité d'analyse (A) par des signaux du capteur de sécurité.

10. Procédé selon la revendication 9, dans lequel
l'unité de commande (S) envoie un signal d'avertissement lorsque l'occupation de siège déterminée avec le premier coussin du siège à capteur (OSCM) sur le siège de véhicule n'est pas confirmée par les seconds signaux de capteur (SE2) analysés du second coussin du siège à capteur (PPDM).
